# EUROPÄISCHE PATENTSCHRIFT

(11) **EP 2 454 494 B1**
(45) Veröffentlichungstag und Bekanntmachung des Hinweises auf die Patenterteilung: **26.11.2014**
(21) Anmeldenummer: 10743012.6
(22) Anmeldetag: 28.06.2010
(51) Int. Cl.: F16B 25/10

(54) **SELBSTLOCHFORMENDES BEFESTIGUNGSELEMENT**
SELF-DRILLING FASTENING ELEMENT
ÉLÉMENT DE FIXATION AUTO-PERCEUR

(30) Priorität: 15.07.2009 DE 202009009651 U
(43) Veröffentlichungstag der Anmeldung: 23.05.2012
(73) Patentinhaber: Ruia Global Fasteners AG, 41462 Neuss (DE)
(72) Erfinder: BONGARTZ, Robert, 41464 Neuss (DE); ESPER, Stephan, 56566 Neuwied (DE); AHLBORN, Stefan, 47877 Willich (DE)
(74) Vertreter: Beck, Alexander
(86) Internationale Anmeldenummer: PCT/DE2010/050041
(87) Internationale Veröffentlichungsnummer: WO 2011/006491

(56) Entgegenhaltungen:
- DE-A1-102004 046 427
- DE-A1-102006 034 584

## Beschreibung

### Technisches Gebiet

Die vorliegende Erfindung betrifft ein selbstlochformendes Befestigungselement, beispielsweise eine Bohrschraube oder ein selbstlochformendes Blindniet mit einer rotationssymmetrischen Bohrspitze und einem Schaft.

Solche selbstlochformenden Befestigungselemente verzeichnen einen erhöhten Bedarf, da auf das aufwendige Vorbohren und Gewindeschneiden verzichtet werden kann.

### Stand der Technik

Ursprünglich wurden hier häufig spanende Bohrspitzen verwendet. Dies ist jedoch nachteilig wegen der entstehenden Späne, die abgeführt werden müssen. Demgegenüber haben sich mittlerweile spanlose Verfahren durchgesetzt, bei denen das Material, in das das Befestigungselement gesetzt werden soll, durch die von einer geeignet ausgebildeten Spitze, die mit hoher Drehzahl gegen das Werkstück gedrückt wird, in dem das Befestigungselement gesetzt werden soll, erhitzt und somit plastisch wird. In das dergestalt erweichte Werkstück wird dann das Befestigungselement eingedreht. Vorteilhafterweise entstehen dabei nicht nur keine Späne, sondern es entsteht zusätzlich eine so genannte Tube, also ein Materialaufwurf, durch den die Länge des tragenden Gewindes nach dem Setzen des Befestigungselementes erhöht werden kann.

Entsprechende Befestigungselemente gemäß dem Stand der Technik wiesen kegelförmige (beispielsweise DE 10 2006 034 585), abgeplattet- hohle (DE 10 2006 034 583) oder ballige (beispielsweise 10 2006 034 584) Spitzen auf. Insbesondere ballige Spitzenformen wurden in letzter Zeit bevorzugt. Durch die Balligkeit wollte man einen möglichst guten Reibradius und dadurch eine starke Erwärmung des Werkstücks erreichen.

Die selbstlochformenden Befestigungselemente gemäß dem Stand der Technik weisen üblicherweise einen relativ kleinen Radius an der Spitze auf, sodass die Spitze eine ballige Form bildet. Mit dieser kleinen balligen Auflagefläche wird das Material erwärmt. An diese Spitze schließt sich ein sich erweiterndes kegelförmiges Lochformteil mit einem relativ spitzen Winkel an.

Es hat sich gezeigt, dass mit den Spitzen gemäß dem Stand der Technik eine bestimmte Dnickkraft erforderlich ist, um bei einer genügend hohen Drehzahl ausreichende Reibung zu erzeugen, damit das Material zu fließen beginnt. Des weiteren führen die Spitzen gemäß dem Stand der Technik eine nicht optimale Tubenbildung aus.

### Darstellung der Erfindung

Ausgehend von diesem Stand der Technik ist es daher die Aufgabe der vorliegenden Erfindung, eine Bohrspitze für ein selbstlochformendes Befestigungselement zu schaffen, die die Einformzeit minimiert und gleichzeitig die Performance der Verbindung, insbesondere durch eine optimierte Tubenbildung, erhöht. Erfindungsgemäß soll eine möglichst ökonomische Verarbeitung der selbstlochformenden Befestigungselemente auch bei großen Blechstärken oder beim Setzen in zwei übereinander liegende ungelochte Bleche (insbesondere bei Selbstbohrblindnieten) erzielt werden.

Erfindungsgemäß wird diese Aufgabe dadurch gelöst, dass der Querschnitt der Bohrspitze durch einen ersten Kreisabschnitt mit einem ersten Radius nahe der Spitze und durch zweiten Kreisabschnitt miteinen zweiten Radius nahe dem Schaft begrenzt ist, wobei der Ursprung des zweiten Radius weiter von der Rotationsachse entfernt ist, als der Ursprung des ersten Radius.

Besonders bevorzugt ist, wenn die beiden Radien tangential ineinander übergehen.

Weiter ist es besonders bevorzugt, wenn der zweite Radius über einen kegelförmig verlaufenden Abschnitt in den Schaft übergeht. Dieser kegelförmig verlaufende Abschnitt ermöglicht eine optimale Tubenbildung.

Vorzugsweise weist der kegelförmige Abschnitt dabei einen Winkel α von 28° bis 40°, vorzugsweise 32°, zwischen seinen Flanken auf.

Weiter ist es dabei besonders bevorzugt, wenn der zweite Radius über einen konkav gewölbten Abschnitt mit einem Radius, dessen Mittelpunkt auf der gleichen Seite der Rotationsachse liegt, in den Schaft übergeht.

Dadurch wird die Tubenbildung noch weiter verbessert.

Weiter hat es sich als sehr vorteilhaft erwiesen, wenn zumindest der Abschnitt zwischen dem zweiten Radius und dem Schaft mit radial und senkrecht zur Rotationsachse umlaufenden Nuten versehen ist.

Die Nuten weisen dabei vorzugsweise einen halbkreisförmigen Querschnitt auf.

### Kurze Beschreibung der Zeichnungen

Die Erfindung wird im Folgenden anhand der in der Anlage beigefügten Zeichnung näher erläutert. Es zeigt:
Figur 1 eine selbstlochformende Schraube mit einer erfindungsgemäßen Bohrspitze von der Seite;
Figur 2 den Schnitt A-A der Figur 1;
Figur 3 das Detail der Spitze der Figur 2;
Figur 4 eine selbstlochformende Schraube mit einer weiteren erfindungsgemäßen Bohrspitze mit umlaufenden Nuten von der Seite;
Figur 5 eine selbstlochformende Schraube mit noch einer anderen erfindungsgemäßen Bohrspitze mit konkav gewölbtem Abschnitt von der Seite; und
Figur 6 eine selbstlochformende Schraube mit einer weiteren erfindungsgemäßen Bohrspitze mit konkav gewölbtem Abschnitt und radial umlaufenden Nuten von der Seite.

### Bester Weg zur Ausführung der Erfindung

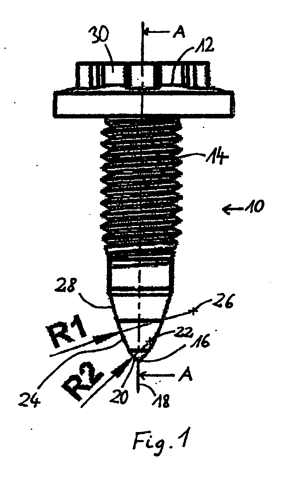

Figur 1 zeigt eine erfindungsgemäße selbstlochformende Schraube, die für die FlieBloch-Bohrtechnik geeignet ist. Die Schraube 10 besteht aus einem Kopf 12 und einem Schaft 14, der mit einem selbstschneidenden Außengewinde versehen ist, und läuft in eine Spitze 16 aus.

Die Schraube 10 ist rotationssymmetrisch um eine Rotationsachse 18 aufgebaut.

Die Spitze 16 weist einen ersten Bereich 20 auf, in dem der Schnitt entlang der Achse A-A durch die Spitze 16 eine Außenkontur aufweist, die einem Radius R2 folgt, dessen Mittelpunkt seitlich außerhalb der Rotationsachse 18 auf der gegenüberliegenden Seite der Rotationsachse 18 liegt.

Diesem Bereich 20, in dem der Querschnitt der Spitze 16 durch den Radius R2 begrenzt ist, schließt sich auf den Schaft 14 hin ein weiterer Bereich 24 an, in dem der Querschnitt der Spitze 16 nach außen hin durch einen weiteren, größeren Radius R1 begrenzt ist, der einen ebenfalls auf der gegenüberliegenden Seite der Rotationsachse 18 liegenden, aber deutlich weiter von der Rotationsachse entfernten Ursprungspunkt 26 aufweist.

An diesen zweiten Bereich der Spitze 16 schließt sich auf den Schaft 14 hin ein kegelförmiger Abschnitt 28 an, der sodann mit einem leichten Radius in den Schaft 14 übergeht.

Der kegelförmige Abschnitt 28 der Spitze 16 weist dabei einen Winkel von 28-40°, vorzugsweise 32° zwischen den Linien auf, die seinen Querschnitt nach außen begrenzen.

In dem dargestellten Ausführungsbeispiel weist der Schraubenkopf 12 einen hexalobulären Außenkraftangriff 30 auf. In gleicher Weise können natürlich alle anderen gebräuchlichen Kraftangriffe Verwendung finden.

Eine erfindungsgemäß gestaltete Spitze kann genauso für mit Fließlochbohrtechnik selbstlochformende Blindniete und beliebige andere selbstlochfonnende Befestigungselemente verwendet werden.

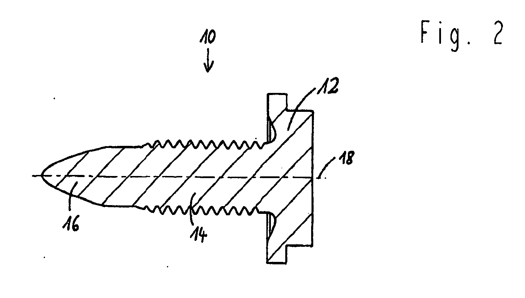

Figur 2 stellt eine Schnittdarstellung entlang der Schnittlinie A-A (der Rotationsachse 18) dar.

Hierbei ist als Dimensionierungsbeispiel eine M5 Schraube gewählt.

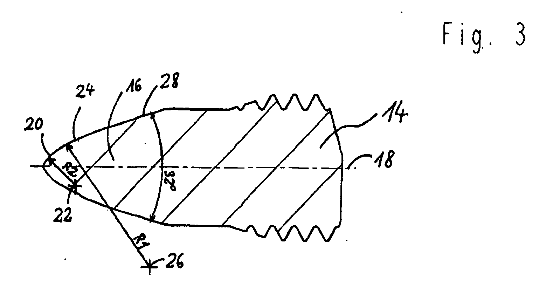

Die Spitze 16 ist dabei im Detail in Figur 3 dargestellt.

In Figur 3 wird deutlich erkennbar, dass die Außenkontur der dort im Schnitt dargestellten Spitze 16 an ihrem dem Schaft abgewandten Ende tatsächlich eine echte Spitze, und keine ballige Form aufweist. Diese Spitze entsteht durch das Aufeinandertreffen der beiden Radien R2, deren Ursprung außerhalb der Rotationsachse 18 auf der jeweils gegenüberliegenden Seite liegt.

Als Dimensionierungsbeispiel soll hier für eine M5 Schraube angegeben werden:

Der erste Radius R2 beträgt 1,5 mm und sein Ursprungspunkt 22 befindet sich 1,3 mm von der Spitze entfernt auf den Schaft 14 hin und 0,7 mm von der Rotationsachse 18 beabstandet. Der anschließende Radius R1 beträgt 10,8 mm und sein Ursprungspunkt findet sich 5,7 mm von der Spitze entfernt und 8,9 mm von der Rotationsachse 18 entfernt. Dieser Radius geht sodann in einen kegelförmigen Abschnitt 28 über, dessen Flanken miteinander einen Winkel von 32° einschließen.

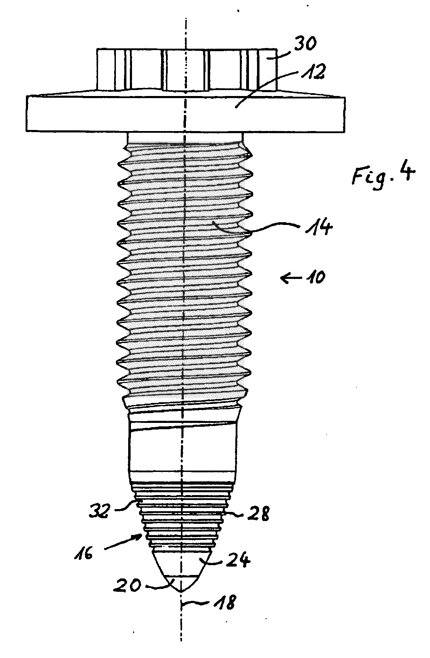

Figur 4 zeigt eine weitere erfindungsgemäße Ausführungsform einer selbstlochbohrenden Schraube.

Kopf und Schaft entsprechen der Schraube gemäß Figur 1, die Bohrspitze ist ebenfalls mit den beiden Radien R1 und R2 sowie mit dem konischen Abschnitt 28 versehen.

Der gesamte konische Abschnitt 28 sowie ein Teil des mit dem Radius R1 gewölbten Abschnittes sind jedoch mit radial verlaufenden, horizontal zur Rotationsachse 18 angeordneten Nuten 32 versehen. Diese weisen einen halbkreisförrnigen Querschnitt auf.

Durch die Nuten 32 wird einerseits die Tubenformung weiter verbessert und der Materialaufwurf auf der Eindringseite der selbstlochformenden Schraube verringert, des weiteren wird durch die erhöhte Reibung erreicht, dass auch bei niedrigeren Drehzahlen der Schraube beim Lochformen eine ausreichende Wärmeenergie zur Plastifizierung des Werkstückmaterials zur Verfügung steht.

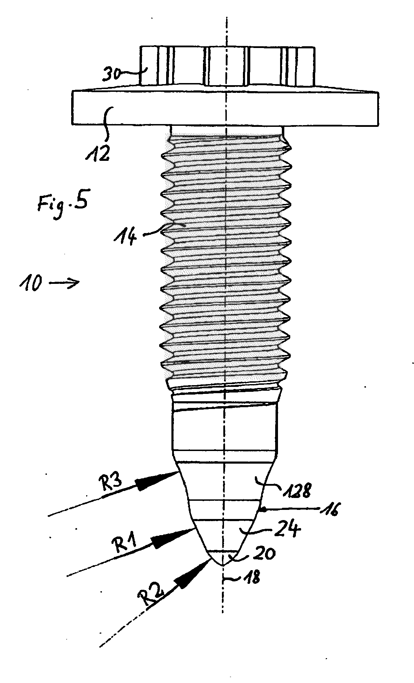

Figur 5 zeigt eine weitere erfindungsgemäße Ausführungsform der selbstlochformenden Schraube. Auch hier sind Schraubenkopf 12 und Schraubenschaft 14 wie in Figur 1 ausgeführt.

Die Bohrspitze ist jedoch dergestalt abgewandelt, dass anstelle des konischen Abschnittes 28 ein konkav gewölbter Abschnitt 128 zwischen dem Schaft 14 und dem zweiten Radius R1 angeordnet ist. Durch diese konkave Ausgestaltung wird die Tubenformung weiter optimiert und es wird in erster Linie vermieden, dass plastifiziertes Material entgegen der Eindringrichtung der selbstlochformenden Schraube aufgeworfen werden kann. Dadurch, dass erfindungsgemäß kaum Material auf der Eindringseite der Schraube aufgeworfen wird, steht mehr Material für die Tubenbildung zur Verfügung, und die Schraube kann auch in entsprechend dünneres Material gesetzt werden.

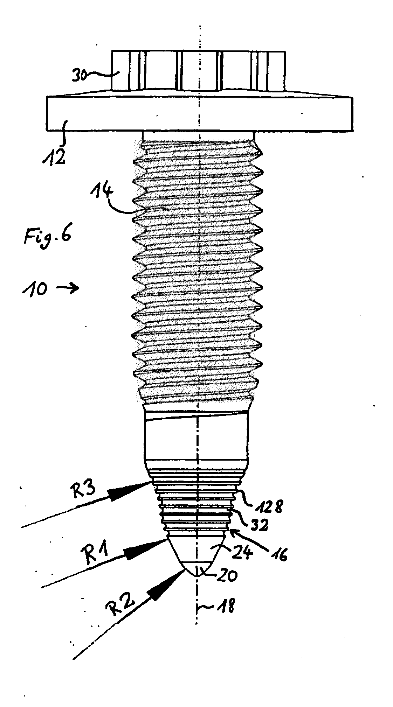

Figur 6 zeigt schließlich eine erfindungsgemäße Kombination der Merkmale der Figuren 4 und 5, wobei zum einen zwischen dem zweiten Radius R1 und dem Schaft 14 ein konkav gewölbter Abschnitt 128 mit einem Radius R3, dessen Mittelpunkt auf der gleichen Seite der Rotationsachse liegt, vorgesehen ist, und dieser Abschnitt 128 sowie ein Teil des Bereichs des zweiten Radius R1 mit radial verlaufenden, horizontal zur Rotationsachse 18 angeordneten Nuten 32 versehen ist, die.einen halbkreisförmige Querschnitt aufweisen.

Durch diese Kombination erfindungsgemäßer Merkmale wird sowohl ein minimaler Materialaufwurf an der Eindringseite als auch eine optimale Tubenbildung und eine hohe Plastifizierung auch bei niedrigeren Drehzahlen durch die durch die Nuten 32 erhöhte Reibung erzielt.

Die erfindungsgemäße Ausführungsform hat den großen Vorteil, dass mit dieser neuen Geometrie der Spitze oder Kuppe die Einformzeit minimiert und die Kraftaufnahmefähigkeit der Verbindung erhöht werden. Dadurch kann ein erfindungsgemäßes Befestigungselement wesentlich ökonomischer auch in große Blechstärken oder in zwei übereinander liegende ungelochte Bleche gesetzt werden. Letzteres ist insbesondere für die Verwendung bei selbstlochformenden Blindnieten von großer Bedeutung.

Durch die erfindungsgemäße Gestaltung der Spitze 16 wird ein schnelles Einformen in dicke Bleche und ein schnelles Aufheizen des Aufsetzpunktes des Befestigungselementes erreicht. Durch die Versetzung der Ursprünge der Einformradien R1, R2 von der Rotationsachse 18 des Befestigungselementes 10 weg wird eine absolute Spitze erreicht. Durch den anschließenden, durch die Radien R2 und R1 sowie durch den kegelförmigen Abschnitt 28 gebildeten Reibkegel wird die Tubenbildung optimiert Dieses ist insbesondere bei selbstlochformenden Schrauben von Bedeutung.

Gegenüber dem Stand der Technik weist die vorliegende Erfindung auch den Vorteil auf, dass eine besonders schnelle Durchformung auch bei großen Materialstärken des Werkstücks, in die das Befestigungselement 10 gesetzt wird, gewährleistet ist. Der Reibkegel 28 sorgt dabei in Verbindung mit den beiden Abschnitten 20 und 24 für eine gute Erwärmung und eine besonders ausgeprägte Tubenbildung auf der Blechunterseite.

Durch diesen erfindungsgemäß speziell gestalteten Reibkegel wird die Tubenbildung begünstigt. Dadurch entsteht eine größere Anzahl tragender Gewindegänge auf der Gegenlage, wenn die vorliegende Erfindung bei einer Schraube Anwendung findet.

Gemäß dem Stand der Technik wurde ein relativ kleiner Radius an der Spitze vorgesehen. Mit dieser kleinen balligen Auflagefläche wurde das Material des Werkstücks erwärmt, in das das Befestigungselement gesetzt werden sollte.

Erfindungsgemäß wird das Material des Werkstücks nicht durch die Spitzenausbildung, sondern durch die darauf folgenden zentrisch versetzten, tangential ineinander übergehenden Radien R2, R1 mit anschließendem kegeligen Formteil 28 erwärmt. In ihrer speziellen erfindungsgemäßen Kombination sorgt diese Geometrie für eine große Auflagefläche, eine entsprechend schnelle Erwärmung des Materials und eine gute Tubenausbildung.

Erfindungsgemäß wird also die Einformzeit verringert und gleichzeitig die Anzahl der tragenden Gewindegänge erhöht. Die vorliegende Erfindung kann daher auch bei sehr großen Blechstärken und zwei oder mehr ungelochten Blechen Verwendung finden.

## Patentansprüche

1. Selbstlochformendes Befestigungselement (10) mit einer rotationssymmetrischen Bohrspitze (16), und einem Schaft (14), **dadurch gekennzeichnet, dass** der Querschnitt der Bohrspitze (16) durch einen ersten Kreisabschnitt mit einem ersten Radius (R2), dessen Ursprung (22) außerhalb der Rotationsachse (18) der Bohrspitze (16) auf der der Rotationsachse (18) gegenüberliegenden Seite liegt, nahe der Bohrspitze (16) und durch einen zweiten Kreisabschnitt mit einem zweiten Radius (R1) nahe dem Schaft (14) begrenzt ist, wobei der Ursprung (26) des zweiten Radius (R1) weiter von der Rotationsachse (18) entfernt ist, als der Ursprung (22) des ersten Radius (R2), und ebenfalls auf der gegenüberliegenden Seite der Rotationsachse (18) liegt.

2. Selbstlochformendes Befestigungselement (10) nach Anspruch 1, **dadurch gekennzeichnet, dass** die beiden Radien (R2, R1) tangential ineinander übergehen.

3. Selbstlochformendes Befestigungselement (10) nach Anspruch 1 oder 2, **dadurch gekennzeichnet, dass** der zweite Radius (R1) über einen kegelförmig verlaufenden Abschnitt (28) in den Schaft (14) übergeht.

4. Selbstlochformendes Befestigungselement (10) nach Anspruch 3, **dadurch gekennzeichnet, dass** der kegelförmige Abschnitt (28) einen Winkel α von 28° bis 40°, vorzugsweise 32°, zwischen seinen Flanken aufweist.

5. Selbstlochformendes Befestigungselement (10) nach Anspruch 1 oder 2, **dadurch gekennzeichnet, dass** der zweite Radius (R1) über einen konkav gewölbten Abschnitt (128) mit einem Radius (R3), dessen Mittelpunkt auf der gleichen Seite der Rotationsachse (18) liegt, in den Schaft (14) übergeht.

6. Selbsdochformendes Befestigungselement (10) nach einem der Ansprüche 3, 4 oder 5, **dadurch gekennzeichnet, dass** zumindest der Abschnitt (28, 128) zwischen dem zweiten Radius (R1) und dem Schaft (14) mit radial und senkrecht zur Rotationsachse (18) umlaufenden Nuten (32) versehen ist.

7. Selbstlochformendes Befestigungselement (10) nach Anspruch 6, **dadurch gekennzeichnet, dass** die Nuten (32) einen halbkreisförmigen Querschnitt aufweisen.

## Claims

1. Self-drilling fastener (10) comprising a rotationally symmetrical drilling tip (16) and a shank (14), **characterised in that** the cross section of the drilling tip (16) is defined by a first segment of a circle having a first radius (R2), the origin (22) of which is located outside the axis of rotation (18) of the drilling tip (16) on the side opposite the axis of rotation (18), close to the drilling tip (16) and by a second segment of a circle having a second radius (R1) close to the shank (14), the origin (26) of the second radius (R1) being further than the origin (22) of the first radius (R2) from the axis of rotation (18), and also being located on the opposite side of the axis of rotation (18).

2. Self-drilling fastener (10) according to claim 1, **characterised in that** the two radii (R2, R1) transition tangentially into each other.

3. Self-drilling fastener (10) according to either claim 1 or claim 2, **characterised in that** the second radius (R1) transitions into the shank (14) via a conically extending portion (28).

4. Self-drilling fastener (10) according to claim 3, **characterised in that** the conical portion (28) has an angle α of from 28° to 40°, preferably 32°, between its flanks.

5. Self-drilling fastener (10) according to either claim 1 or claim 2, **characterised in that** the second radius (R1) transitions into the shank (14) via a concavely curved portion (128) having a radius (R3) of which the centre is located on the same side of the axis of rotation (18).

6. Self-drilling fastener (10) according to any of claims 3, 4 or 5, **characterised in that** at least the portion (28, 128) between the second radius (R1) and the shank (14) is provided with grooves (32) which circulate radially perpendicular to the axis of rotation (18).

7. Self-drilling fastener (10) according to claim 6, **characterised in that** the grooves (32) have a semi-circular cross section.

## Revendications

1. Elément de fixation (10) auto-perceur comprenant une pointe de perçage (16) symétrique en rotation ainsi qu'une tige (14), **caractérisé en ce que** la section transversale de la pointe de perçage (16) est délimitée par une première une section circulaire présentant un premier rayon (R2), dont l'origine (22) se trouve en dehors de l'axe de rotation (18) de la pointe de perçage (16) sur le côté faisant face à l'axe de rotation (18), à proximité de la pointe de perçage (16) et par une deuxième section circulaire présentant un deuxième rayon (R1) à proximité de la tige (14), où l'origine (26) du deuxième rayon (R1) est davantage éloignée de l'axe de rotation (18) que l'origine (22) du premier rayon (R2) et se trouve également sur le côté faisant face de l'axe de rotation (18).

2. Elément de fixation (10) auto-perceur selon la revendication 1, **caractérisé en ce que** les deux rayons (R2, R1) se confondent de manière tangentielle.

3. Elément de fixation (10) auto-perceur selon la revendication 1 ou 2, **caractérisé en ce que** le deuxième rayon (R1) se confond avec la tige (14) par une section (28) s'étendant de manière à présenter une forme de cône.

4. Elément de fixation (10) auto-perceur selon la revendication 3, **caractérisé en ce que** la section (28) présentant une forme de cône présente, entre ses flancs, un angle α allant de 28° à 40°, de préférence un angle de 32°.

5. Elément de fixation (10) auto-perceur selon la revendication 1 ou 2, **caractérisé en ce que** le deuxième rayon (R1) se confond avec la tige (14) par une section (128) incurvée de manière concave présentant un rayon (R3), dont le point central se trouve sur le même côté de l'axe de rotation (18).

6. Elément de fixation (10) auto-perceur selon l'une quelconque des revendications 3, 4 ou 5, **caractérisé en ce qu'**au moins la section (28, 128) entre le deuxième rayon (R1) et la tige (14) est pourvue de rainures (32) périphériques radialement et perpendiculairement par rapport à l'axe de rotation (18).

7. Elément de fixation (10) auto-perceur selon la revendication 6, **caractérisé en ce que** les rainures (32) présentent une section transversale présentant une forme semi-circulaire.
